# EUROPEAN PATENT SPECIFICATION

(11) **EP 3 872 476 B1**
(45) Date of publication and mention of the grant of the patent: **17.04.2024**
(21) Application number: 20159489.2
(22) Date of filing: 26.02.2020
(51) Int. Cl.: G01N 15/06, G01N 15/14

(54) **PARTICLE MAGNIFIER AND PARTICLE COUNTER FOR PARTICLES IN A FLOW**
TEILCHENVERGRÖSSERER UND TEILCHENZÄHLER FÜR TEILCHEN IN EINER STRÖMUNG
DISPOSITIF DE GROSSISSEMENT DE PARTICULES ET COMPTEUR DE PARTICULES DANS UN FLUX

(43) Date of publication of application: 01.09.2021
(73) Proprietor: Technische Universität Graz, 8010 Graz (AT)
(72) Inventor: BAINSCHAB, Markus, 8010 Graz (AT); BERGMANN, Alexander, 8052 Graz (AT)
(74) Representative: Weiser & Voith Patentanwälte Partnerschaft

(56) References cited:
- WO-A2-2014/055652
- US-A- 3 592 546
- US-A- 5 239 356
- US-A1- 2018 133 744
- US-A1- 2019 219 493
- US-B1- 6 498 641

## Description

The present invention relates to a particle magnifier for magnifying particles carried by a carrier gas in a flow, comprising a conditioner for conditioning the flow with a working gas, a cooler for cooling the conditioned flow such that working gas condenses on the particles, and a first conduit for guiding the flow in a flow direction successively through the conditioner and the cooler. The invention further relates to a particle counter comprising the particle magnifier.

Particle magnifiers are typically used in particle counters, however, they are not limited to such a use. For detecting and counting particles in an aerosol, i.e., in a dispersion of solid and/or liquid particles carried by a carrier gas, different types of particle counters are known. Usually, particle counters for aerosols have an optical detector, e.g., a source for a laser light directed at the aerosol flow and a photo-sensor detecting particles in the flow on the basis of the laser light scattered by each particle. However, the sizes of particles to be measured, e.g., in air pollution monitoring or in particle concentration measurement of combustion engine exhausts, decrease due to an evolution in combustion processes and/or in statutory requirements. Light scattered by particles of very small size is yet hard or even impossible to be detected with conventional means. To solve this problem, particle magnifiers have been developed that exploit the properties of the particles to act as condensation nuclei and grow ("magnify") the particles in the flow by condensation of a working gas, e.g., water or butanol vapour, on the particles until they are sufficiently large to be detected in the particle detector. To this end, a wick is soaked with, e.g., liquid water, butanol etc., and exposed to the flow such that the liquid is vaporised by the flow, thereby saturating the flow with the vapour, i.e., the working gas; when subsequently cooling the flow, the working gas condenses on the particles, cf. US 5239356 B.

This process used, e.g., in known particle counters - also referred to as "condensation nuclei counters" or "condensation particle counters" - very much depends on the temperature and on the equilibrium vapour pressure which is working gas specific. Moreover, the maximum operation temperature of such condensation nuclei counters is generally limited to room temperature or slightly above, e.g. to 35°C or 40°C, mainly due to the wick and its vaporisation of the liquid. In many cases, though, only non-volatile particles are to be counted, i.e., particles that are not vaporised at a temperature of typically 350°C; volatile particles, that vaporise only between the operation temperature of the particle counter and said, e.g., 350°C, substantially impair the counting result in these cases.

For countering this drawback, it has been proposed by N. Collings et al., "A Condensation Particle Counter Insensitive to Volatile Particles", Journal of Aerosol Science 73 (2014), 27 - 38, to use a silicon carbide diesel particle filter as a wick in a through-flow device to saturate an auxiliary gas first, e.g., clean air or Nitrogen, at a temperature of 150°C to 200°C with a special working gas suitable for such elevated temperatures, e.g., with per-fluorinated polyether or polyphenyl-ether. The auxiliary gas saturated with the working gas is then conveyed into the cooler into which the aerosol flow is injected at the same elevated temperature. Thereby, the operation temperature of the particle counter can be raised with respect to previous particle counters. However, the proposed particle counter has a complex structure and still substantially depends on temperature and equilibrium vapour pressure. Furthermore, the applicability is limited by the availability of a suitable working gas for the required operation temperature as well as the particles to be counted: For condensing on the particles, the working gas has to wet their surfaces. While the maximum operation temperature reachable with such a particle counter is expected to be 300°C at best, this is still lower than generally required, e.g., for monitoring combustion processes.

A different solution has been proposed by M. Bainschab et al., "Aerosol Gas Exchange System (AGES) for Nanoparticle Sampling at Elevated Temperatures: Modeling and Experimental Characterization", Sci Rep 9, 17149 (2019) doi: 10.1038/s41598-019-53113-5. According thereto, the aerosol flow is heated (in the proposed example to a temperature of 200°C, with higher temperatures to be achieved) and the carrier gas and the volatile particles that are vaporised at this temperature are exchanged to a clean purge gas by means of a so-called counter flow denuder, described, e.g., in *H. Hiroyuki,* "Laboratory Evaluation of Nanoparticles Penetration Efficiency in a Cylindrical Counter Flow Denuder for non-specific Removal of Trace Gases", Aerosol Science and Technology, 51:4, 443 - 450, doi: 10.1080/ 02786826.2016,1271939. The remaining non-volatile particles now carried by the purge gas in the flow can later be counted at any convenient temperature by means of a conventional condensation nuclei counter connected to the counter flow denuder, as e.g., described in US 2019/0219493 A1.

It is an object of the present invention to provide a particle magnifier and a particle counter which are reliable, flexibly usable, less dependent on temperature and pressure, also applicable at higher temperature, and the structures of which are straightforward.

According to a first aspect, this object is achieved with a particle magnifier of the type mentioned at the outset, which is distinguished in that the conditioner has a second conduit for the working gas, wherein the first and second conduit are in fluid communication via a membrane that is permeable to both the carrier gas and the working gas and impermeable to the particles, such that at least part of the carrier gas in the flow can be substituted by the working gas, such that molecules of the carrier gas can diffuse from the first to the second conduit and molecules of the working gas can diffuse from the second to the first conduit through the membrane.

This particle magnifier does not require a complex structure and particularly has a continuous, straightforward flow through the first conduit. As the working gas in this case is gaseous before being brought into the flow, the particle magnifier is suitable for any temperature above the boiling point or the dew point of the working gas. Therefore, the present particle magnifier can be flexibly used with a huge variety of known and easily available substances including water and butanol. This is not impaired by the fact that both the boiling point and the dew point depend on the pressure as known to the skilled person, because the pressure is easy to handle with the present straightforward design. Moreover, by substituting carrier gas by working gas the particle magnifier is less dependent on the temperature and independent, or at least largely independent, of the equilibrium vapour pressure and thus more reliable than particle magnifiers of prior art particle counters.

In an advantageous embodiment, the particle magnifier further comprises a heating or cooling device which is heat-conductively connected to the first conduit upstream the conditioner and configured to bring the flow to a predetermined temperature. The heating or cooling device facilitates a matching of the flow's temperature with the predetermined temperature of the process in the particle magnifier. Thereby, the particle magnifier becomes independent of the temperature of the flow fed into the first conduit; an optimum process temperature can be achieved.

It is favourable when the conditioner comprises a pressuriser which is conductively connected to the second conduit and configured to keep a pressure difference between the second conduit and the first conduit below a predetermined threshold. A reliable substitution of the carrier gas by the working gas can thereby be achieved in the conditioner. Moreover, this supports a substitution of the carrier gas by the working gas by diffusion rather than by convective mass transport through the membrane, thus achieving a high substitution rate, without affecting the flow in the first conduit.

In a preferred embodiment, the conditioner is configured to create a counterflow in the second conduit along the membrane with respect to the flow direction in the first conduit. The efficiency of substituting the carrier gas by the working gas is particularly high in such a condition. Experiments have shown that up to or even above 99% of the carrier gas can be substituted by working gas when using a counterflow.

It is favourable when the conditioner comprises a reservoir for a working substance upstream the second conduit and a heater for vaporising the working substance in the reservoir to the working gas. By storing and vaporising the working substance and providing the working gas by the conditioner, the particle magnifier is self-contained while keeping a small overall size.

In a beneficial embodiment, the conditioner comprises a cooled container downstream the second conduit for condensing unused working gas. The unused working gas can thereby be collected for an optional later reuse.

A variety of different designs of the first and second conduit and the membrane may be used in the particle magnifier, e.g., a parallel plate membrane etc. It is, however, particularly advantageous when the membrane is substantially tubular, wherein the first conduit is inside and the second conduit is outside the tubular membrane. This provides a specifically large surface of the membrane for efficient substitution of carrier gas by working gas.

The membrane may be of any suitable type and material. It is favourable, though, when the membrane is made of a porous glass. Porous glass is heat resistant, reliable and very durable as a membrane.

The cooler may, e.g., use a heat exchanger for cooling the first conduit and/or its wall. In a beneficial embodiment, the cooler is configured to inject a cooling gas into the first conduit for cooling the flow. A cooler of this type achieves a simple and reliable way of cooling the flow and effectively prohibits condensation of working gas on the first conduit's wall and/or on a heat exchanger's surface.

In a second aspect, the present invention creates a particle counter for counting particles carried by a carrier gas in a flow, which particle counter comprises a particle magnifier of the aforementioned type and a detector, wherein a first conduit is configured to guide the flow in a flow direction successively through a conditioner and a cooler of the particle magnifier and through the detector, and wherein the detector is configured to detect, in the flow, and to count the particles with working gas condensate thereon.

With respect to further embodiments of the particle counter and advantages thereof, it is referred to the above statements on the particle magnifier.

The invention shall now be explained in further detail below on the basis of an exemplary embodiment thereof with reference to the accompanying drawings, in which:
Fig. 1 shows a particle counter comprising a particle magnifier according to the present invention in a schematic side view;
Fig. 2 shows a first conduit of the particle magnifier and the particle counter of Fig. 1 in a fragmentary sectional view; and
Fig. 3 shows a temperature and saturation profile in the first conduit of Fig. 2 in a schematic diagram over the length of the first conduit.

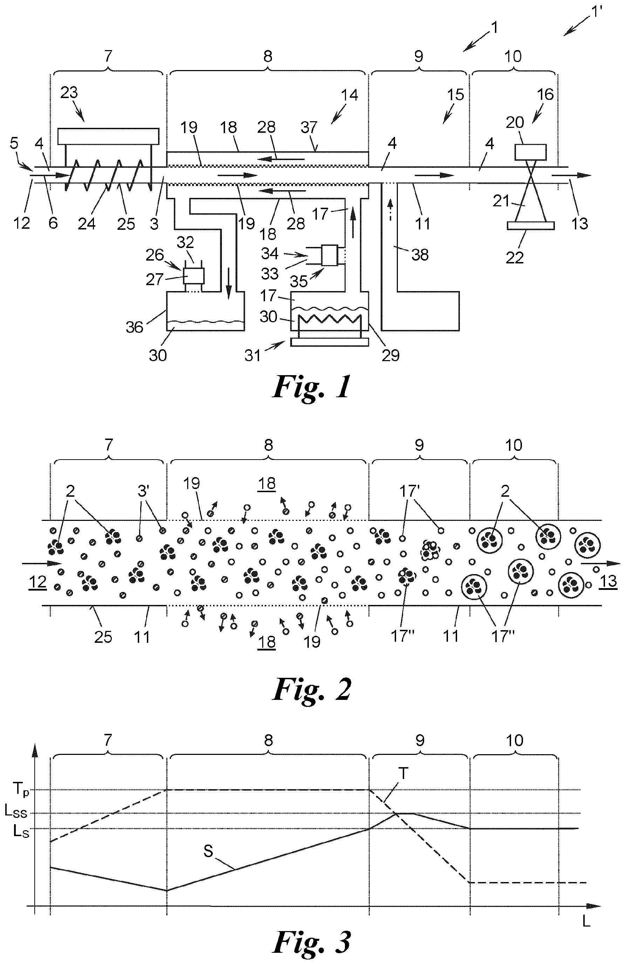

Figs. 1 and 2 schematically show a particle magnifier 1 which magnifies particles 2 that are carried by a carrier gas 3 in a flow 4, and a particle counter 1' comprising the particle magnifier 1 for counting the particles 2 in the flow 4. The particles 2 are solid or liquid, have sizes in a range from 1 nm to several 100 nm, i.e., they are nanoparticles, and may be of natural origin or man-made, e.g., resulting from combustion. The carrier gas 3 may be a mixture of different gases and is symbolised in the enlarged depiction of Fig. 2 by hatched dots representing carrier gas molecules 3' which are substantially smaller than the particles 2 in the flow 4. It shall be noted in this context, that Fig. 2 is not drawn to scale.

With reference to Figs. 1 to 3, details and embodiments of the particle magnifier 1 and the particle counter 1' shall now be explicated in detail. For easier reference, Figs. 1 to 3 are consistently sectioned according to functions, in a direction 6 of the flow 4, into: an optional heating or cooling section 7, a subsequent conditioner section 8, a cooler section 9 following the conditioner section 8, and, finally, an optional detector section 10. In accordance therewith, a first conduit 11 guides the flow 4 in the flow direction 6 between an inlet 12 and an outlet 13 of the first conduit 11 successively at least through a conditioner 14 and a cooler 15 of the particle magnifier 1 and, in case of the particle counter 1', also through a detector 16 of the particle counter 1'. The conditioner 14, the cooler 15 and the detector 16 are located in the conditioner section 8, the cooler section 9, and the detector section 10, respectively.

The conditioner 14 conditions the flow 4 with a working gas 17. To this end, the conditioner 14 has a second conduit 18 for the working gas 17, and the first and second conduit 11, 18 are in mutual fluid communication via a membrane 19. The membrane 19 is permeable to both the carrier gas 3 and the working gas 17 but is impermeable to the particles 2. As symbolised by small arrows in Fig. 2, molecules 3' of the carrier gas 3 diffuse from the first to the second conduit 11, 18 and molecules 17' of the working gas 17, represented by open dots in Fig. 2, diffuse from the second to the first conduit 18, 11 through the membrane 19. Thereby, at least part of the carrier gas 3 in the flow 4 is substituted by the working gas 17 in the conditioner 14, as will be explicated in greater detail further below.

From the conditioner 14, the first conduit 11 guides the flow 4 conditioned with working gas 17 to the cooler 15. The cooler 15 cools the conditioned flow 4 such that working gas 17 condenses. The working gas 17 is suited for condensing on the particles 2 when sufficiently cooled; this includes that the working gas wets the particles' surfaces. Thereby, the particles 2 in the flow 4 are grown ("magnified") in the particle magnifier 1 before leaving the cooler section 9 and, thus, the particle magnifier 1.

In case of the particle magnifier 1 being comprised in the particle counter 1', the first conduit 11 further guides the cooled flow 4 from the cooler 15 to the detector 16 of the particle counter 1'. The detector 16 is of any type known in the art that is capable of detecting, in the cooled flow 4, each particle 2 that has working gas condensate 17" thereon, e.g., an optical detector 16 having a laser light source 20 emitting a laser light 21 into the flow 4 and onto a photo-sensor 22. In this case, the photo-sensor 22 detects a particle 2 by the laser light 21 scattered by the particle 2 and/or the working gas condensate 17" thereon as known in the art. The detector 16 is further configured to count the detected particles 2.

Optionally the particle magnifier 1 further comprises a heating or cooling device 23. The heating or cooling device 23 heats or cools the flow 4 when it is not at a predetermined temperature Tₚ at the inlet 12 of the first conduit 11. To this end, the heating or cooling device 23 is heat-conductively connected to the first conduit 11 in the heating or cooling section 7 upstream the conditioner 14 and has, e.g., a heat exchanger 24 abutting on a wall 25 of the first conduit 11. The temperature Tₚ is predetermined based on the respective requirements; in a case where only non-volatile particles 2 in the flow 4, i.e., particles 2 that do not vaporise below a certain temperature, e.g., 350 °C, shall be counted, this temperature will be used as the predetermined temperature Tₚ. In other cases, a different temperature Tₚ may be predetermined.

In the present example, the heating or cooling device 23 heats the flow 4 to raise the temperature T thereof to the predetermined temperature Tₚ in the heating or cooling section 7, as depicted by the dashed line over the length L of the particle counter 1 in Fig. 3. When, on the other hand, the flow 4 at the inlet 12 of the first conduit 11 would have a temperature T above the predetermined temperature Tₚ, the heating or cooling device 23 would cool the flow 4 to the predetermined temperature Tₚ. Moreover, the carrier gas 3 sometimes comprises some gas of the same type as the working gas 17, e.g., when the working gas 17 is water vapour and the carrier gas 3 is an exhaust gas of a combustion engine, which also comprises water vapour. In such a case, a (low) saturation S of the flow 4 with, e.g., water vapour further decreases when heating the flow 4 in the heating or cooling section 7 as depicted by the solid line in the example of Fig. 3.

Generally, the first and second conduits 11, 18 are at the same or a similar pressure level. However, the conditioner 14 may optionally comprise a pressuriser 26 which is conductively connected to the second circuit 18, e.g., upstream or downstream the membrane 19. The pressuriser 26 is configured to keep a pressure difference between the second circuit 18 and the first circuit 11, i.e., the absolute value of the pressure difference, below a predetermined threshold of, e.g., 10 mbar, 1 mbar, 0.5 mbar or even less. To this end, the pressuriser 26 may comprise a pump and/or a control valve 27 and may measure and compare a respective pressure both in the first and in the second conduit 11, 18 as known in the art.

Moreover, the conditioner 14 optionally creates a counterflow in the second conduit 18 along the membrane 19 with respect to the flow direction 6 in the first conduit 11, i.e., a flow in a direction 28 opposed to the flow direction 6 of the first conduit 11, e.g., by means of the pressuriser 26.

As depicted in Fig. 3, the saturation S of the flow 4 with working gas 17 reaches a level Lₛ in the conditioner 14 at the downstream end of the conditioner section 8, whereas the temperature T in the first conduit 11 is substantially stable throughout the conditioner section 8. The saturation level Lₛ is close or equal to 100% saturation S. However, at least part of the carrier gas 3 may remain in the flow 4 downstream the conditioner 14 as symbolised by the few molecules 3' of carrier gas 3 in the cooler section of Fig. 2.

In an optional embodiment, the conditioner 14 further comprises a reservoir 29 for a working substance 30, i.e., the working gas 17 in its liquid or solid state. In this embodiment, the conditioner 14 further comprises a heater 31, which is heat-conductively connected to the reservoir 29 and vaporises the working substance 30 in the reservoir 29 to the working gas 17 which is provided to the second conduit 18.

In the optional case where the working substance 30 in the reservoir 29 is solid, the heater 31 melts and vaporises the working substance 30 or, depending on the working substance 30, sublimates the working substance 30 to the working gas 17, which shall all be comprised by the term "vaporising" the working substance 30 in the present context. Similarly, a deposition of working gas 17 as a solid working substance 30 on a particle 2 or a freezing of working gas condensate 17" thereon in the cooler section 9 shall also be comprised by the term "condensing" on the particle 2 in the present context.

The optional pump and/or control valve 27 of the pressuriser 26 may control the pressure of working gas 17 provided from the reservoir 29 to the second conduit 18 in the example of Fig. 1. In this example, the pump and/or control valve 27 of the pressuriser 26 is located at an optional outlet 32 of the second conduit 18 downstream the membrane 19. Moreover, the second conduit 18 may optionally have an inlet 33 for admixing a further gas 34 to the working gas 17 upstream the membrane 19; said admixing may be controlled, e.g., by a further pressuriser 35 at the inlet 33 of the second conduit 18 and/or by the abovementioned pressuriser 26.

It shall be understood that the working gas 17 in the second conduit 18 is, generally, at the same or a similar temperature as the temperature Tₚ predetermined for the flow 4 in the first conduit 11. To this end the working gas 17 is either provided to the conditioner 14 at this temperature, or, e.g., the heater 31 heats the working gas 17 to this temperature.

In the shown example, the conditioner 14 further comprises an optional cooled container 36 downstream the second conduit 18 and connected thereto. In the cooled container 36, working gas 17 that has not been used in the second conduit 18 for substituting carrier gas 3 is condensed and contained in liquid or solid form as working substance 30, e.g., for later reuse.

The membrane 19 may be of any shape, type and material known in the art. Similarly, the first and second conduits 11, 18 may be of any suitable cross-sectional shape. For example, the membrane 19 may be a porous plate between the first and second conduit 11, 18 which have, e.g., rectangular or semicircular cross-sectional shape in this case. Optionally, the membrane 19 may be formed by two parallel porous plates, between which the first conduit 11 runs, and outside each of which a respective part of the second conduit 18 runs. In the example of Figs. 1 and 2, however, the membrane 19 is substantially tubular and the first conduit 11 is inside the tubular membrane 19, whereas the second conduit 18 is outside the tubular membrane 19 such that it has, e.g., an annular cross-section and is enclosed by a wall 37. It shall be understood, that the membrane 19 may be composed of a plurality of membranous members, e.g., a plurality of tubular membranes of the abovementioned type, together forming the membrane 19. Furthermore, the membrane 19 is optionally made of a porous glass, e.g., of a glass known as Shirasu Porous Glass, produced by SPG Techno Co., Ltd. of Japan.

In the cooler section 9, the temperature T of the flow 4 is decreased by means of the cooler 15. To this end, the cooler 15, similar to the heater or cooler device 23, may be equipped with a heat exchanger that is heat-conductively connected to the first conduit 11. In the example of Fig. 1, however, the cooler 15 injects a cooling gas 38 into the first conduit 11 for cooling the flow 4. The cooling gas 38 does not contain any further particles that might affect the counting of the particles 2 in the flow 4 as shall be understood.

As a consequence of cooling, the flow 4 becomes supersaturated with working gas 17 in the cooler section 9, i.e., it reaches a level of super saturation Lₛₛ (Fig. 3). Hence, the working gas 17 condenses on the particles 2, i.e., the surfaces thereof, as the particles 2 act as condensation nuclei for the condensing working gas 17. This is depicted in Fig. 2 by an increasing number of working gas molecules 17' condensing as condensate 17" on the particles 2. As known on the art, the condensation of the working gas 17 occurs when the saturation vapour pressure falls below the partial pressure of the working gas 17. Due to the substantially constant pressure in the first conduit 11 of the present particle magnifier 1, the temperature T is the main parameter of influence, however.

In the optionally subsequent detector section 10, the particles 2 of the flow 4 are detected by the detector 16 of the particle counter 1'. Due to the increased size of the particles 2 which have working gas condensate 17" thereon, the photo-sensor 22 can detect the scattered laser light 21, such that they can be counted.

The invention is not restricted to the specific embodiments described in detail herein, but encompasses all variants, combinations and modifications thereof that fall within the frame of the appended claims.

## Claims

1. A particle magnifier for magnifying particles (2) carried by a carrier gas (3) in a flow (4), comprising a conditioner (14) for conditioning the flow (4) with a working gas (17), a cooler (15) for cooling the conditioned flow (4) such that working gas (17) condenses on the particles (2), and a first conduit (11) for guiding the flow (4) in a flow direction (6) successively through the conditioner (14) and the cooler (15),
**characterised in that**
the conditioner (14) has a second conduit (18) for the working gas (17), wherein the first and second conduit (11, 18) are in fluid communication via a membrane (19) that is permeable to both the carrier gas (3) and the working gas (17) and impermeable to the particles (2), such that at least part of the carrier gas (3) in the flow (4) can be substituted by the working gas (17), such that molecules (3') of the carrier gas (3) can diffuse from the first to the second conduit (11, 18) and molecules (17') of the working gas (17) can diffuse from the second to the first conduit (18, 11) through the membrane (19) .

2. The particle magnifier according to claim 1, **characterised by** a heating or cooling device (23) which is heat-conductively connected to the first conduit (11) upstream the conditioner (14) and configured to bring the flow (4) to a predetermined temperature (Tₚ).

3. The particle magnifier according to claim 1 or 2, **characterised in that** the conditioner (14) comprises a pressuriser (26) which is conductively connected to the second conduit (18) and configured to keep a pressure difference between the second conduit (18) and the first conduit (11) below a predetermined threshold.

4. The particle magnifier according to any one of claims 1 to 3, **characterised in that** the conditioner (14) is configured to create a counterflow in the second conduit (18) along the membrane (19) with respect to the flow direction (6) in the first conduit (11).

5. The particle magnifier according to any one of claims 1 to 4, **characterised in that** the conditioner (14) comprises a reservoir (29) for a working substance (30) upstream the second conduit (18) and a heater (31) for vaporising the working substance (30) in the reservoir (29) to the working gas (17).

6. The particle magnifier according to any one of claims 1 to 5, **characterised in that** the conditioner (14) comprises a cooled container (36) downstream the second conduit (18) for condensing unused working gas (17).

7. The particle magnifier according to any one of claims 1 to 6, **characterised in that** the membrane (19) is substantially tubular, wherein the first conduit (11) is inside and the second conduit (18) is outside the tubular membrane (19).

8. The particle magnifier according to any one of claims 1 to 7, **characterised in that** the membrane (19) is made of a porous glass.

9. The particle magnifier according to any one of claims 1 to 8, **characterised in that** the cooler (15) is configured to inject a cooling gas (38) into the first conduit (11) for cooling the flow (4).

10. A particle counter for counting particles (2) carried by a carrier gas (3) in a flow (4), comprising the particle magnifier (1) according to any one of claims 1 to 9 and a detector (16), wherein a first conduit (11) is configured to guide the flow (4) in a flow direction (6) successively through a conditioner (14) and a cooler (15) of the particle magnifier (1) and through the detector (16), and wherein the detector (16) is configured to detect, in the flow (4), and to count the particles (2) with working gas condensate (17") thereon.

## Patentansprüche

1. Teilchenvergrößerer zum Vergrößern von Teilchen (2), die von einem Trägergas (3) in einem Strom (4) getragen werden, umfassend eine Aufbereitungseinheit (14) zum Aufbereiten des Stromes (4) mit einem Arbeitsgas (17), einen Kühler (15) zum Kühlen des aufbereiteten Stromes (4), sodass das Arbeitsgas (17) an den Teilchen (2) kondensiert, und eine erste Leitung (11) zum Führen des Stroms (4) in einer Strömungsrichtung (6) nacheinander durch die Aufbereitungseinheit (14) und den Kühler (15),
**dadurch gekennzeichnet, dass**
die Aufbereitungseinheit (14) eine zweite Leitung (18) für das Arbeitsgas (17) aufweist, wobei die erste und die zweite Leitung (11, 18) über eine Membran (19) fluidisch kommunizieren, die sowohl für das Trägergas (3) als auch für das Arbeitsgas (17) durchlässig und für die Teilchen (2) undurchlässig ist, sodass zumindest ein Teil des Trägergases (3) im Strom (4) durch das Arbeitsgas (17) ersetzt werden kann, sodass Moleküle (3') des Trägergases (3) von der ersten zur zweiten Leitung (11, 18) diffundieren können und Moleküle (17') des Arbeitsgases (17) durch die Membran (19) von der zweiten zur ersten Leitung (18, 11) diffundieren können.

2. Teilchenvergrößerer nach Anspruch 1, **gekennzeichnet durch** eine Heiz- oder Kühleinrichtung (23), die stromaufwärts der Aufbereitungseinheit (14) wärmeleitend mit der ersten Leitung (11) verbunden und dazu ausgebildet ist, den Strom (4) auf eine vorgegebene Temperatur (Tₚ) zu bringen.

3. Teilchenvergrößerer nach Anspruch 1 oder 2, **dadurch gekennzeichnet, dass** die Aufbereitungseinheit (14) einen Druckhalter (26) umfasst, der leitend mit der zweiten Leitung (18) verbunden und dazu ausgebildet ist, einen Druckunterschied zwischen der zweiten Leitung (18) und der ersten Leitung (11) unter einem vorgegebenen Schwellwert zu halten.

4. Teilchenvergrößerer nach einem der Ansprüche 1 bis 3, **dadurch gekennzeichnet, dass** die Aufbereitungseinheit (14) dazu ausgebildet ist, in der zweiten Leitung (18) entlang der Membran (19) einen Gegenstrom in Bezug zur Strömungsrichtung (6) in der ersten Leitung (11) zu erzeugen.

5. Teilchenvergrößerer nach einem der Ansprüche 1 bis 4, **dadurch gekennzeichnet, dass** die Aufbereitungseinheit (14) einen Tank (29) für eine Arbeitssubstanz (30) stromaufwärts der zweiten Leitung (18) und eine Heizung (31) zum Verdampfen der Arbeitssubstanz (30) im Tank (29) zum Arbeitsgas (17) umfasst.

6. Teilchenvergrößerer nach einem der Ansprüche 1 bis 5, **dadurch gekennzeichnet, dass** die Aufbereitungseinheit (14) einen gekühlten Behälter (36) stromabwärts der zweiten Leitung (18) zum Kondensieren von ungenutztem Arbeitsgas (17) umfasst.

7. Teilchenvergrößerer nach einem der Ansprüche 1 bis 6, **dadurch gekennzeichnet, dass** die Membran (19) im Wesentlichen rohrförmig ist, wobei die erste Leitung (11) innerhalb und die zweite Leitung (18) außerhalb der rohrförmigen Membran (19) liegt.

8. Teilchenvergrößerer nach einem der Ansprüche 1 bis 7, **dadurch gekennzeichnet, dass** die Membran (19) aus porösem Glas ist.

9. Teilchenvergrößerer nach einem der Ansprüche 1 bis 8, **dadurch gekennzeichnet, dass** der Kühler (15) dazu ausgebildet ist, ein Kühlgas (38) in die erste Leitung (11) einzuspeisen, um den Strom (4) zu kühlen.

10. Teilchenzähler zum Zählen von Teilchen (2), die von einem Trägergas (3) in einem Strom (4) getragen werden, umfassend den Teilchenvergrößerer (1) nach einem der Ansprüche 1 bis 9 und einen Detektor (16), wobei eine erste Leitung (11) dazu ausgebildet ist, den Strom (4) in einer Strömungsrichtung (6) nacheinander durch eine Aufbereitungseinheit (14) und einen Kühler (15) des Teilchenvergrößerers (1) und durch den Detektor (16) zu führen, und wobei der Detektor (16) dazu ausgebildet ist, die Teilchen (2) mit Arbeitsgas-Kondensat (17") daran im Strom (4) zu erfassen und zu zählen.

## Revendications

1. Dispositif de grossissement de particules pour grossir des particules (2) transportées par un gaz porteur (3) dans un flux (4), comprenant un dispositif de conditionnement (14) pour conditionner le flux (4) avec un gaz de travail (17), un refroidisseur (15) pour refroidir le flux conditionné (4) de telle sorte que le gaz de travail (17) se condense sur les particules (2), et une première conduite (11) pour guider le flux (4) dans une direction de flux (6) successivement à travers le dispositif de conditionnement (14) et le refroidisseur (15),
**caractérisée en ce que**
le dispositif de conditionnement (14) a une seconde conduite (18) pour le gaz de travail (17), où les première et seconde conduites (11, 18) sont en communication fluidique par le biais d'une membrane (19) qui est perméable à la fois au gaz porteur (3) et au gaz de travail (17) et imperméable aux particules (2), de telle sorte qu'au moins une partie du gaz porteur (3) dans le flux (4) peut être substituée par le gaz de travail (17), de telle sorte que des molécules (3') du gaz porteur (3) peuvent se diffuser de la première à la seconde conduite (11, 18) et des molécules (17') du gaz de porteur (17) peuvent se diffuser de la seconde à la première conduite (18, 11) à travers la membrane (19).

2. Dispositif de grossissement de particules selon la revendication 1, **caractérisée par** un dispositif de chauffage ou de refroidissement (23) qui est relié de manière thermoconductrice à la première conduite (11) en amont du dispositif de conditionnement (14) et conçu pour amener le flux (4) à une température prédéterminée (Tₚ).

3. Dispositif de grossissement de particules selon la revendication 1 ou 2, **caractérisée en ce que** le dispositif de conditionnement (14) comprend un pressuriseur (26) qui est relié de manière conductrice à la seconde conduite (18) et conçu pour maintenir une différence de pression entre la seconde conduite (18) et la première conduite (11) sous un seuil prédéterminé.

4. Dispositif de grossissement de particules selon l'une quelconque des revendications 1 à 3, **caractérisée en ce que** le dispositif de conditionnement (14) est conçu pour créer un contre-flux dans la seconde conduite (18) le long de la membrane (19) par rapport à la direction du flux (6) dans la première conduite (11).

5. Dispositif de grossissement de particules selon l'une quelconque des revendications 1 à 4, **caractérisée en ce que** le dispositif de conditionnement (14) comprend un réservoir (29) pour une substance de travail (30) en amont de la seconde conduite (18) et un réchauffeur (31) pour vaporiser la substance de travail (30) dans le réservoir (29) en gaz de travail (17).

6. Dispositif de grossissement de particules selon l'une quelconque des revendications 1 à 5, **caractérisée en ce que** le dispositif de conditionnement (14) comprend un récipient refroidi (36) en aval de la seconde conduite (18) pour condenser le gaz de travail (17) non utilisé.

7. Dispositif de grossissement de particules selon l'une quelconque des revendications 1 à 6, **caractérisée en ce que** la membrane (19) est essentiellement tubulaire, où la première conduite (11) est à l'intérieur et la seconde conduite (18) est à l'extérieur de la membrane tubulaire (19).

8. Dispositif de grossissement de particules selon l'une quelconque des revendications 1 à 7, **caractérisée en ce que** la membrane (19) est fabriquée en un verre poreux.

9. Dispositif de grossissement de particules selon l'une quelconque des revendications 1 à 8, **caractérisée en ce que** le refroidisseur (15) est conçu pour injecter un gaz de refroidissement (38) dans la première conduite (11) pour refroidir le flux (4).

10. Compteur de particules pour compter les particules (2) transportées par un gaz porteur (3) dans un flux (4), comprenant le dispositif de grossissement de particules (1) selon l'une quelconque des revendications 1 à 9 et un détecteur (16), dans lequel une première conduite (11) est conçue pour guider le flux (4) dans une direction de flux (6) successivement à travers un dispositif de conditionnement (14) et un refroidisseur (15) du dispositif de grossissement de particules (1) et à travers le détecteur (16), et dans lequel le détecteur (16) est conçu pour détecter, dans le flux (4), et pour compter les particules (2) avec le condensat de gaz de travail (17") dessus.
